# EUROPEAN PATENT SPECIFICATION

(11) **EP 2 687 834 B1**
(45) Date of publication and mention of the grant of the patent: **09.09.2015**
(21) Application number: 13177059.6
(22) Date of filing: 18.07.2013
(51) Int. Cl.: G01L 5/10

(54) **Measuring instrument and method for measuring an applied force**
Messinstrument und Verfahren zur Messung einer ausgeübten Kraft
Appareil pour mesurer et méthode de mesurer une force appliquee

(30) Priority: 18.07.2012 IT MI20121256
(43) Date of publication of application: 22.01.2014
(73) Proprietor: S2Tech S.r.l., 20143 Milano (IT)
(72) Inventor: Piardi, Silvio, 20143 Milano - MI (IT); Esposti, Simone, 20143 Milano - MI (IT)
(74) Representative: Simino, Massimo

(56) References cited:
- EP-A1- 1 475 616
- DE-A1- 1 481 709
- DE-A1- 3 707 618

## Description

The present invention relates to a measuring instrument as defined in the preamble of claim 1, for measuring an applied force, particularly tension in an element, such as a cable, a film, a fabric, or a continuous material, which is subjected to forces that cause tensioning thereof.

In further aspects, the present invention also relates to:
a method of measuring an applied force, particularly tension in an element, such as a cable, a film, a fabric, or a continuous material, which is subjected to forces that cause tensioning thereof, and
   - a cable plant or a lift plant, comprising an instrument for measuring tension in one or more cables.

As used herein, the term cable is generally intended to designate a flexible loadbearing element mainly extending in an axial direction, and adapted to support tensile loads.

Therefore, the term cable is generally used to designate members that are functionally equivalent to a cable, such as a film, a fabric or a continuous material subjected to forces that cause tensioning thereof, as well as to designate a flat belt as is currently used in lift plants instead of the more traditional stranded ropes or rope assemblies.

For simplicity, reference will be particularly made herein, without limitation, to an instrument for measuring tension in a load supporting cable of a lift plant.

In cable lift plants, measuring instruments are installed, for measuring the tension of the cables that are designed to support the lift car, either directly, e.g. at the cable fixation point, or in an indirect or derived manner. This is useful both to check that the loads applied to such cables fall within the design range, and to identify any abnormal operation of the lift plant, and prevent any accident.

In various operating modes, these measuring instruments may be employed as load-weighing devices or, in maintenance applications, for homogeneous tension adjustment of all cables, for optimized operation of the cable plant and lower wear of the parts. Furthermore, these measuring elements may be used to improve lift operation comfort, when adequately connected to tension control systems.

In lift plants, current measuring instruments use strain gage transducers which are mounted to the cable and can thus generate an electric signal proportional to the strain or elongation endured according to the tension in the cable.

While these instruments are suitable for their intended purpose, they still suffer from certain drawbacks, including the restricted response range of strain-gage load cells, involving the use of very sensitive and expensive instruments, and the difficulty to ensure measurement accuracy. Furthermore, the use of strain-gage load cells involves problems associated with the high sensitivity to temperature changes of strain gage measurement systems, which will require additional electronics for processing the detected strain gage signal. Also, these systems are sensitive to overloads typical of lift applications.

Therefore, at present the need is strongly felt for a measuring instrument that can measure the amount of an applied force, particularly tension in a cable or a functionally equivalent element, which is reliable and can be manufactured in a simple and inexpensive manner, affords an optimal measurement accuracy in addition to a lower overload sensitivity.

DE 3707618 discloses a device for measuring tensile or compressive forces using two elastic rings situated one inside another: one ring has a gap in whose region a sensor is mounted, a second ring closely embraces the first ring, so that the change in gap width when tensile or compressive forces act on the outer wall of the ring actuates a switch.

As to concern the device according to DE 3707618, it should be noted the following drawbacks:
- it requires the continuity of the cable to be interrupted in order to have the device placed as a link between the interrupted ends of the cable and
- the force to be measured (i.e. a tension of the cable) is applied to a structural element which is distinct and different from the structural element provided with gap and switch.

DE 1481709 discloses a measuring device for measuring the tensile load of ropes, chains or the like and discloses a tubular elastic element provided with an aperture in the axial direction. EP1475 616 discloses a cable tension sensor with a mounting body mounted to the cable with a cylindric pressure flange. The elastic deformation of the mounting body is measured by using strain ganges.

The object of the present invention is to design and provide a measuring system for measuring the amount of an applied force, particularly tension in a cable or a functionally equivalent element, which has such properties as to fulfill the above need and to obviate the drawbacks as described above concerning prior art measuring instruments.

This object is fulfilled by a measuring instrument for measuring the amount of an applied force, particularly tension in a cable or a functionally equivalent element, as defined in claim 1.

In further aspects, the present invention also relates to a cable plant as defined in claim 10, and a method of measuring a force, particularly tension, in a cable, as defined in claim 13.

Further features and advantages of the measuring instrument of the present invention, will be apparent upon reading the following description of one preferred embodiment thereof, which is given by way of illustration and without limitation with reference to the accompanying figures, in which:

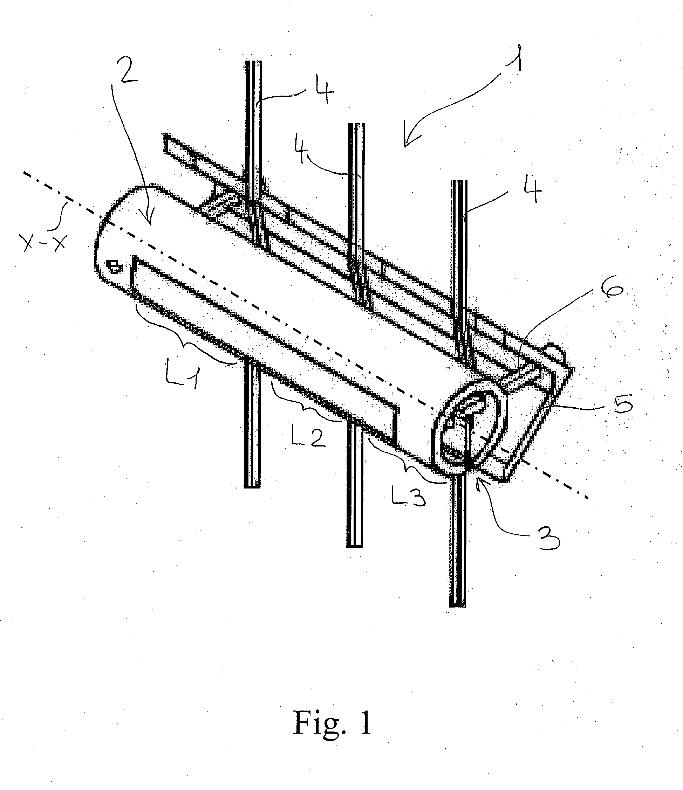

- Figure 1 shows a schematic perspective view of a portion of a cable plant comprising the measuring instrument of the invention;

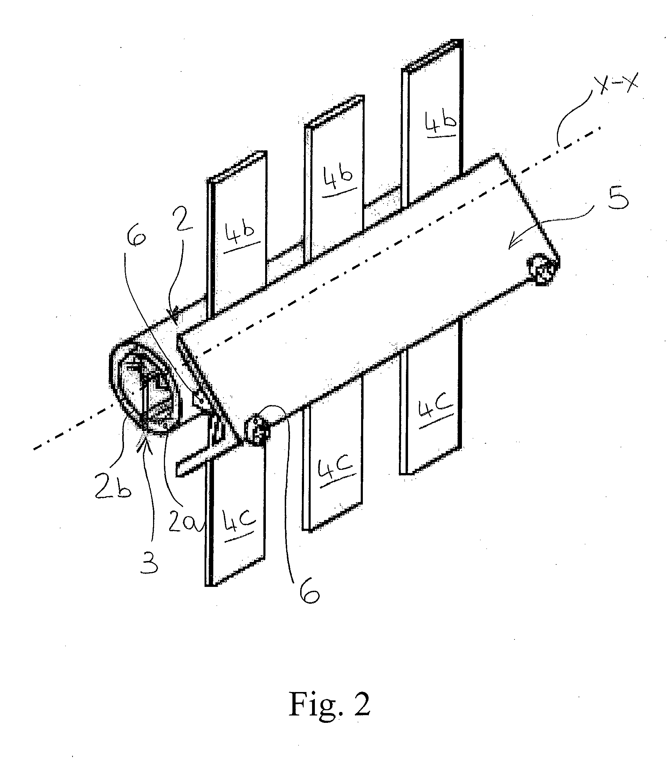

- Figure 2 shows a schematic perspective view of the cable plant of Figure 1, from a different point of view;

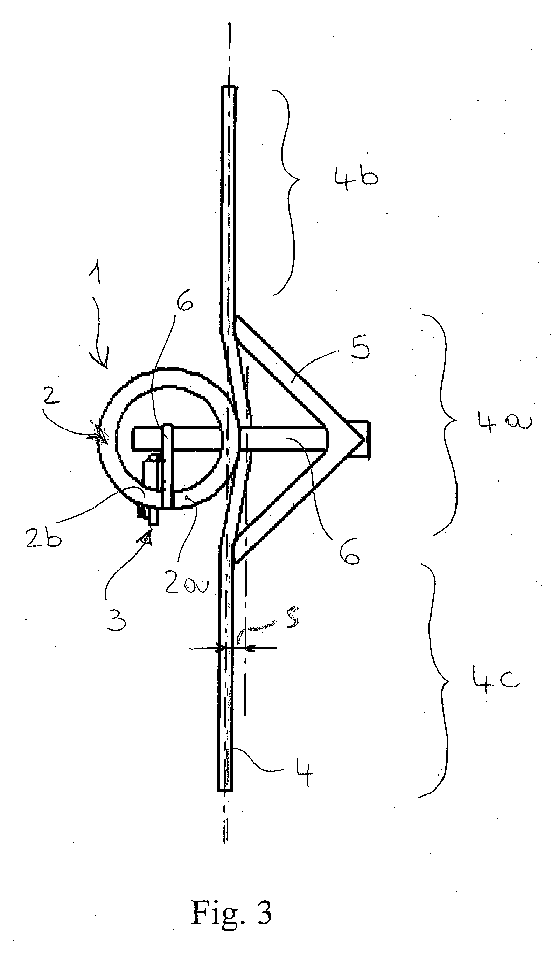

- Figure 3 is a lateral plan view of the cable plant of Figure 1 and

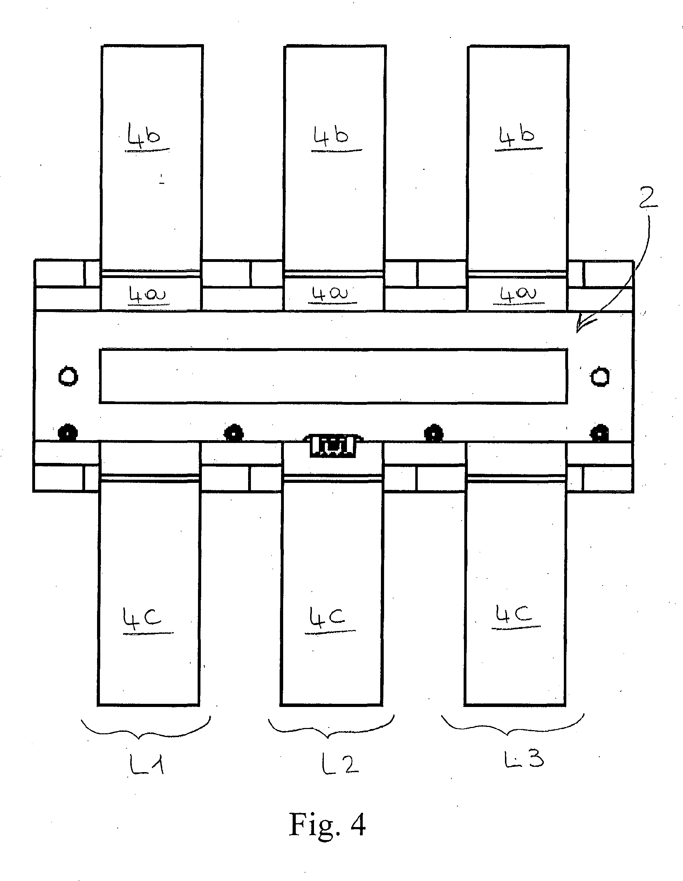

- Figure 4 is a front plan view of the plant of Figure 1.

Referring to the accompanying figures, numeral 1 generally designates a measuring system for measuring an applied force, particularly tension in a cable and the like, the measuring instrument 1 being also usable to measure a force, such as weight force, in an element other than a cable.

The instrument 1 comprises:
- an elastic and deformable structural element, which is designed to be subjected to the force to be measured or a portion of such force, such structural element comprising an elastically deformable structure 2, which is adapted to be elastically deformed under the force to be measured, applied to such structural element, and
- a transducer 3 associated with such structural element to generate an electric signal proportional to the force to be measured, to which said structural element is subjected.

Particularly, the elastically deformable structure 2 shall be adapted to be elastically deformed in controlled, and transducer-detectable fashion.

Therefore, any hollow structure having a closed or open profile and defining a perimeter for the constant- or variable-thickness cavity, and adapted to receive the force transmitted by the tensioned cable may be suitable for this purpose.

The above mentioned elastically deformable structure 2 has at least one first portion 2a and at least one second portion 2b that are distinct from each other, the transducer 3 being applied to or associated with the structure at the first portion 2a and the second portion 2b, to generate an electric signal related to the distance and/or the change of distance between the first portion 2a and the second portion 2b.

Preferably, the elastically deformable structure 2 defines a substantially ring-shaped structure, with the above mentioned first portion 2a and second portion 2b defining exposed portions substantially facing each other. More preferably, these portions 2a and 2b of the elastically deformable structure comprise portions of the inner perimeter of the ring-shaped structure.

According to the embodiment in the figures, the above elastically deformable structure 2 defines an open-ring structure and preferably the first portion 2a and the second portion 2b of the elastically deformable structure 2 define opposed and spaced facing ends of the open ring. In this embodiment, the electric signal generated by the transducer 3 may be advantageously related to the distance and/or change of distance between the opposed and spaced facing ends 2a and 2b of the open ring.

In accordance with the preferred embodiment, as shown in the figures, the above mentioned elastically deformable structure 2 is defined by a tubular element mainly extending in an axial direction X-X.

Here, the open-ring structure 2 is formed with a through opening which extends longitudinally through the thickness of the tubular element, along the axial direction X-X, preferably parallel to the axial direction X-X.

Concerning the particular tubular shape of the elastically deformable structure 2, it appears in the illustrated embodiment as having a substantially circular cross section, although tubular elements having different, e.g. elliptical, polygonal or irregular cross sections, may be provided.

The axial extent of the elastically deformable structure 2 may be conveniently utilized to make substantially independent measurements of forces applied in axially offset locations of the elastically deformable structure 2 of the structural element. For this purpose, the elastically deformable structure 2 has at least two distinct and axially offset axial sections (three sections in the figures, referenced L1, L2, L3), each having thereat a first portion 2a, a second portion 2b and a transducer 3 respectively. As a result, the transducer 3 associated with a respective axial section L1, L2 and L3 generates a distinct signal, related to the distance and/or the change of distance between the first portion 2a and the second portion 2b of the relevant axial section L1, L2, L3.

In order to prevent the force applied to the axial section L1 from affecting measurement of forces applied to the axial section L2 or the axial section L3 and vice versa, the axial sections L1, L2 and L3 may be partially separated/isolated from each other by cuts or other arrangements, extending transverse to the tubular element, whereby the deformation of the first axial section L1 of the elastically deformable structure 2 does not affect or extend to the second axial section L2 or the third axial section L3 and vice versa, which will avoid alterations in the measurement of forces applied at each of these distinct and axially offset axial sections.

According to a preferred embodiment, the transducer/s 3 of the measuring instrument 1 comprise a capacitive element that generates an electric signal related to the distance and/or the change of distance between the first portion 2a and the second portion 2b of the elastically deformable structure 2 of the structural element that has the transducer applied thereto or associated therewith.

Alternatively to the above, structurally or functionally equivalent transducers may be used, e.g. a measuring system based on a proximity sensor, or another type of sensor, that can generate an electric signal related to the distance and/or the change of distance between the first portion 2a and the second portion 2b of the elastically deformable structure 2 of the structural element that has the transducer applied thereto or associated therewith.

In this embodiment, when an open-ring elastically deformable structure 2 is provided, the above mentioned opposed and spaced facing ends 2a and 2b of the open ring define the opposed plates of a capacitor, whereas the space between the spaced facing ends 2a and 2b forms the gap of the capacitor. Therefore, the electric signal generated by the transducer 3 is related to the value of the gap/distance between the spaced facing ends 2a and 2b of the structural element.

Preferably, the measuring instrument 1 of the invention comprises an electronic control unit incorporated in the instrument and associated with the structural element. Once the measuring instrument has been manufactured, it is tested for calibration of the electric control unit, and more generally of the measuring instrument, according to the characteristics of the response to the test load applied to the particular transducer. Special procedures and settings of the equipment during installation of the measuring instrument allow load measurement to be directly expressed in mechanical units (with weight being namely expressed in kilograms) without requiring complex calibration procedures during installation, using standard weights.

According to a preferred embodiment, the instrument 1 may be advantageously used to measure tension in a cable, e.g. in a lift plant comprising at least one cable 4 for supporting a lift car.

In this example, the lift plant comprises a plurality of cables, here three cables, providing a flat belt conformation.

The measuring instrument 1 as described above in its variants finds application in such lift plant, and is placed in such position as to be able to interact with all the cables 4 to provide independent tension measurement in each cable, or a measurement corresponding to the sum of the tensions of all the cables.

Namely, the measuring instrument 1 is placed in the proximity of a tensioned branch of each cable, preferably in the proximity of a terminal or another fixed point of said cable, such that the elastically deformable structure 2 contacts a first axial section 4a of the cable 4 to cause an axial displacement or transverse deviation S thereof from the sections 4b, 4c of the cable 4, located directly upstream and directly downstream the first axial section 4a that has transversely deviated from the axis of the cable.

Therefore, the elastically deformable structure 2 is in such position as to extend transverse to the axial direction of each cable 4, such that a lateral portion thereof may interfere with such cable to cause the above mentioned transverse displacement/deviation S from the axis of the cable 4. This ensures that the first deviated section 4a of the cable 4 acts with a predetermined load on the elastically deformable structure 2 of the structural element, which is elastically deformed in response to the load transmitted by the cable 4.

For the deviation of the cable 4 to be localized and confined to the first section 4a only, the measuring instrument 1 comprises a pushing member 5 conformed in such a manner and situated in such a position as to act upon the cable 4 above and below the first axial section 4a against the action exerted upon the first axial section 4 by the elastically deformable structure 2.

The pushing member 5 is designed with such a shape as to prevent damage to the cables at contact points, e.g. avoiding the presence of sharp or cutting contact points.

As a whole, the pushing member 5 and the elastically deformable structure 2 define a constrained path through which the cable 4 passes to be subjected to the transverse deviation S from the cable axis.

It shall be noted that the pushing member may be omitted in different applications, where the cable element or similar element passes through a constrained path which is designed to force the cable, or similar element, to abut the elastically deformable structure 2.

As shown herein, the elastically deformable structure 2 and the pushing member 5 transversely and oppositely act upon contiguous axial points or sections of each cable 4.

In the illustrated embodiment, the measuring instrument may comprise adjustment means 6 for adjusting the mutual distance between the elastically deformable structure 2 and the pushing member 5, as measured transverse to the axis of the cable 4. As the distance of the elastically deformable structure 2 from the pushing member 5 is increased or reduced, in a direction transverse to the axis of the cable 4, the amount of the transverse displacement S imparted to the first section 4a of the cable 4 in the above mentioned constrained path may be changed, and the tension of the cable 4 may thus have act upon the elastically deformable structure 2 to a greater or smaller extent.

Thus, the adjustment means allow the measuring system to be used in many plant types and configurations, as they allow pre-load adjustment to be performed in a simple and reliable manner, and irrespective of the maximum load.

The measuring system is further configured to allow installation on tensioned cables without using special equipment or tools, and without particular efforts, while ensuring continuous operation control.

Furthermore, the operator is assisted/guided by the electronics of the measuring system, to adjust the means 6 for optimal pre-tensioning.

The above mentioned adjustment means 6 may advantageously be screw adjustment means, like in the illustrated example, for substantially smooth adjustment of the distance between the elastically deformable structure 2 and the pushing member 5 in the adjustment range.

Alternatively, adjustment means may be provided, comprising a lever system, a cam system, or else.

In the illustrated embodiment, the pushing member 5 consists of an angle section positioned with the intrados facing the elastically deformable structure 2, such that its free ends 5a and 5b act upon the cable/s 4 directly upstream and downstream from the first axial section 4a of the cable 4.

It shall be understood that the geometry of the pushing member 5 may be changed to fit various application and/or production requirements.

Referring to a cable plant, the measuring instrument 1 is used by applying it to a tensioned branch of the cable, or of multiple cables, preferably in the proximity of a terminal, such that the cable 4 will pass through the constrained path defined between the elastically deformable structure 3 and the pushing member 5. By this arrangement, the first axial section 4a of the cable is transversely deviated by the above mentioned adjustable amount S from the axis of the cable 4. This ensures a bearing pressure contact of the first axial section 4a of the cable 4 on the elastically deformable structure 2, namely on the lateral wall, preferably on the outer lateral wall of the open-ring tubular element. In short, the elastically deformable structure 2 is loaded, preferably from outside, with a compression force. The thrust generated by the pressure of the first axial section 4a of the cable 4 on the elastically deformable structure 2 causes deformation thereof which accordingly changes the electric signal generated by the transducer 3.

Possibly, the adjustment means 6 may be controlled to increase or decrease the value of the transverse deviation S imparted to the first axial section 4a of the cable 4, thereby causing a corresponding increase or decrease of the deformation of the elastically deformable structure 2.

In short, the method of measuring a force, particularly tension in a cable or the like, using the measuring instrument, comprises the steps of:
- at least partially applying the force to be measured to the elastically deformable structure 2 of the structural element, to cause an elastic deformation of the elastically deformable structure 2,
- generating by the transducer 3 of the measuring instrument a first electric signal related to the distance or the change of distance between the first portion 2a and the second portion 2b of the elastically deformable structure 2, or related to the deformation of the structure 2, the modulus of the force applied to the elastically deformable structure 2 being determined from the generated electric signal.

This may be generally obtained, as is known in the field of transducers, by comparing the above mentioned first electric signal so generated with sample electric signals generated by the transducer upon application of forces having a known modulus to the elastically deformable structure. Alternatively, other correlations or calculation formulas may be used.

As described above, if the elastically deformable structure 2 is a closed-ring structure, the application of a force to be measured, or a part of it, to such ring-shaped structure 2, preferably a force applied to the outer wall of said ring-shaped structure, causes a geometric deformation of the elastically deformable structure with respect to an initial rest conformation.

Accordingly, the first electric signal generated by a particular transducer 3 is related to the distance and/or change of distance between two distinct portions 2a and 2b of the inner perimeter of the ring-shaped structure, after the deformation.

As described above, if the elastically deformable structure 2 is an open-ring structure, the application of a force to be measured, or a part of it, to such open-ring structure, preferably the outer portion of such ring-shaped structure, causes a geometric deformation of the open-ring structure with respect to an initial rest conformation, with the two opposed and spaced facing ends 2a and 2b of the open ring being moved away or toward each other. Accordingly, the first electric signal generated by the particular transducer 3 is related to the distance and/or change of distance between the two opposed and spaced facing ends 2a and 2b of the open ring.

As clearly shown in the above description, the measuring instrument of the present invention fulfills the above mentioned need and also obviates prior art drawbacks as set out in the introduction of this disclosure. Indeed, the presence of an elastically deformable structure having the transducer applied thereto provides accurate measurements in a simple and reliable manner.

Particularly, the ring-shaped structure, and preferably the open-ring structure, was found to provide an optimal response in terms of deformation consistency as determined in the elastically deformable structure 2 upon application of forces having equal strengths to such structure 2.

Furthermore, the measuring instrument of the invention is particularly adapted for measuring tension in a cable, as it allows simultaneous tension detection in multiple parallel cables, and such instrument is particularly suitable for use in lift plants, which generally comprise multiple car-supporting cables.

The measuring instrument of the present invention is a digital system, having a lower sensitivity to temperature changes than strain gage measuring systems, and requiring no additional electronics for strain gage signal conditioning.

Furthermore, the measuring instrument of the present invention is less expensive than strain gage measuring systems, may be manufactured from a wider range of materials, is less sensitive to overloads than strain gage measuring systems, and may be supplied in a pre-calibrated state, for measurements to be expressed in mechanical units.

The system of the present invention is equipped with a maximum load limiter, that can be applied to the elastically deformable structure for improved reliability.

Yet another advantage of the measuring instrument of the invention is the possibility of making measurements using a capacitive transducer which, as compared with other types of transducers, e.g. strain gage transducers, provides better measurements with simpler means and instruments for performing such operations, which will involve a cost reduction.

Those skilled in the art will obviously appreciate that a number of changes and variants may be made to the above described measuring instrument, without departure from the scope of the invention, as defined in the following claims.

It may be particularly appreciated that the above described structural element that is designed to be subjected to the force to be measured may have a closed- or open-profile structure, defining a perimeter for a constant- or variable-thickness cavity, and adapted to receive the force transmitted by the tensioned cable to be thereby deformed in a controlled and transducer-detectable manner.

## Claims

1. **A measuring instrument for measuring an applied force** in a cable (4) and the like, comprising a structural element, which is designed to be subjected to the force to be measured, and a transducer (3) associated with said structural element to generate an electric signal proportional to the force to be measured, to which said structural element is subjected,
**characterized in that:**
- said structural element comprises an elastically deformable structure (2), which is adapted to be elastically deformed by the force to be measured, preferably a compression force, applied to said structural element, preferably applied to an outer portion of said structural element,
- said elastically deformable structure (2) has therein at least one first portion (2a) and at least one second portion (2b) separate from each other and
- said transducer (3) is associated with said elastically deformable structure (2) at said first portion (2a) and said second portion (2b) to generate an electric signal correlated to the distance and/or the change of distance between said first portion (2a) and said second portion (2b).

2. An instrument as claimed in claim 1, wherein said first portion (2a) and said second portion (2b) of said elastically deformable structure (2) are substantially facing exposed portions.

3. An instrument as claimed in any claim from 1 to 2, wherein said elastically deformable structure (2) defines an open-ring structure.

4. An instrument as claimed in claim 3, wherein:
- said first portion (2a) and said second portion (2b) of said elastically deformable structure (2) define opposed and spaced facing ends of said open ring and
- said electric signal generated by said transducer (3) being correlated to the distance and/or change of distance between said opposed and spaced facing ends of said open ring.

5. An instrument as claimed in any claim from 1 to 2, wherein said elastically deformable structure (2) is defined by a tubular element extending in a prevailing axial direction (X-X).

6. An instrument as claimed in claim 5, wherein the wall of said tubular element has an aperture extending along said prevailing axial direction (X-X).

7. An instrument as claimed in claim 5 or 6, wherein said tubular element has at least two separate and axially offset axial sections (L1, L2, L3), and each of said at least two axial sections (L1, L2, L3) comprises thereat a first portion (2a) and a second portion (2b) respectively, with a transducer (3) respectively associated therewith, the transverse offset of said at least two axial sections (L1, L2, L3) allowing independent measurement of forces applied at said separate and axially offset axial sections (L1, L2, L3) respectively.

8. An instrument as claimed in any claim from 1 to 7, wherein said transducer (3) comprises a capacitive element that generates an electric signal correlated to the distance between said first portion (2a) and said second portion (2b) of said structural element to which the transducer (3) is mounted.

9. An instrument as claimed in claims 4 and 8, wherein said opposed and spaced facing ends of said open ring define the plates of a capacitor, whereas the space between said spaced facing ends forms the air gap of said capacitor, the electric signal generated by said transducer (3) being correlated to the value of said air gap/distance between said spaced facing ends of said structural element.

10. **A cable plant** comprising at least one lifting cable (4) with a measuring instrument applied thereto for measuring tension in said at least one cable (4), **characterized in that** said measuring instrument is an instrument as claimed in any claim from 1 to 9, said cable (4) acting with bearing pressure contact against a portion of said structural element, preferably against an outer portion of said measuring instrument.

11. A cable plant as claimed in claim 10, wherein:
- said instrument is integrally supported in the proximity of a tensioned branch of said lifting cable (4), such that said elastically deformable structure (2) contacts a first tensioned axial section (4a) of said cable (4) and causes a transverse deviation (S) of said first tensioned axial section (4a) from the sections (4b, 4c) of said cable (4), located directly upstream and downstream from said axial section (4a) that has transversely deviated from the axis of the cable (4) and
- a pushing member (5) situated in such position as to act upon said cable (4) above and below said first axial section (4a) in contrast with the action exerted upon said first axial section (4a) by said elastically deformable structure (2), said pushing member (5) and said elastically deformable structure (2) defining as a whole a constrained path through which said cable (4) passes to be subjected to said transverse deviation (S)
and
- said elastically deformable structure (2) and said pushing member (5) transversely and oppositely act upon contiguous axial points or sections of said cable (4).

12. A cable plant as claimed in claim 11, comprising adjustment means (6) for adjusting the mutual distance between said elastically deformable structure (2) and the pushing member (5), as measured transverse to the axis of the cable (4), to change the extent of transverse displacement (S) imposed to the cable (4) relative to its axis, in said constrained path.

13. **A method of measuring a force** using a measuring instrument as claimed in any claim from 1 to 9, said method comprising the steps of:
- at least partially applying said force to be measured to the elastically deformable structure (2) of said structural element, to cause an elastic deformation of said elastically deformable structure (2),
- generating by said transducer (3) a first electric signal correlated to the distance or the change of distance between said first portion (2a) and said second portion (2b) of said elastically deformable structure (2) or correlated to the deformation of the structure (2),
- determining the modulus of the force applied to said elastically deformable structure (2) on the basis of the generated electric signal,
wherein:
- said elastically deformable structure (2) defines a substantially ring-shaped structure,
- said force to be measured is applied to one side of said ring-shaped structure to cause a geometric deformation thereof from an initial shape and
- said first signal generated by said transducer (3) is correlated to the distance and/or change of distance between two distinct portions of the inner perimeter of said ring-shaped structure.

14. A method as claimed in claim 13, wherein:
- said elastically deformable structure (2) defines a substantially open-ring structure,
- said force to be measured is applied to one side of said open-ring structure to cause a geometric deformation thereof from an initial shape and
- said first signal generated by said transducer (3) is correlated to the distance and/or change of distance between opposed and spaced facing ends of said open ring.

15. A method as claimed in any claim from 13 to 14, wherein:
- said transducer (3) comprises a capacitive element and
- said step of generating by said transducer (3) a first electric signal is carried out by said capacitive element according to the distance and/or the change of distance between said first portion (2a) and said second portion (2b) of said elastically deformable structure (2) of said structural element.

## Patentansprüche

1. **Messgerät zum Messen** einer in ein Seil (4) und dergleichen **eingeleiteten Kraft,** das ein Bauelement, das gestaltet ist, um mit der zu messenden Kraft beaufschlagt zu werden, und einen Wandler (3) umfasst, der mit dem Bauelement verbunden ist, um ein elektrisches Signal zu erzeugen, das proportional zu der zu messenden Kraft ist, mit der das Bauelement beaufschlagt wird,
**dadurch gekennzeichnet, dass:**
- das Bauelement eine elastisch verformbare Struktur (2) umfasst, die geeignet ist, um von der zu messenden Kraft, vorzugsweise einer Druckkraft, die auf das Bauelement, vorzugsweise auf einen äußeren Abschnitt dieses Bauelements, aufgebracht wird, elastisch verformt zu werden,
- die elastisch verformbare Struktur (2) in sich mindestens einen ersten Abschnitt (2a) und mindestens einen zweiten Abschnitt (2b) aufweist, die voneinander getrennt sind, und
- der Wandler (3) mit der elastisch verformbaren Struktur (2) an dem ersten Abschnitt (2a) und dem zweiten Abschnitt (2b) verbunden ist, um ein elektrisches Signal zu erzeugen, das mit dem Abstand und/oder der Abstandsänderung zwischen dem ersten Abschnitt (2a) und dem zweiten Abschnitt (2b) korreliert ist.

2. Gerät nach Anspruch 1, wobei der erste Abschnitt (2a) und der zweite Abschnitt (2b) der elastisch verformbaren Struktur (2) im Wesentlichen freiliegenden Abschnitten zugewandt sind.

3. Gerät nach einem der Ansprüche von 1 bis 2, wobei die elastisch verformbare Struktur (2) eine Struktur eines offenen Rings definiert.

4. Gerät nach Anspruch 3, wobei:
- der erste Abschnitt (2a) und der zweite Abschnitt (2b) der elastisch verformbaren Struktur (2) entgegengesetzte und beabstandete gegenüberstehende Enden des offenen Rings definieren, und
- das vom Wandler (3) erzeugte elektrische Signal mit dem Abstand und/oder der Abstandsänderung zwischen den entgegengesetzten und beabstandeten gegenüberstehenden Enden des offenen Rings korreliert ist.

5. Gerät nach einem der Ansprüche von 1 bis 2, wobei die elastisch verformbare Struktur (2) von einem röhrenförmigen Element definiert wird, das sich in einer vorwiegenden axialen Richtung (X-X) erstreckt.

6. Gerät nach Anspruch 5, wobei die Wand des röhrenförmigen Elements eine Öffnung aufweist, die sich in der vorwiegenden axialen Richtung (X-X) erstreckt.

7. Gerät nach Anspruch 5 oder 6, wobei das röhrenförmige Element mindestens zwei getrennte und axial versetzte axiale Bereiche (L1, L2, L3) aufweist und jeder dieser mindestens zwei axialen Bereiche (L1, L2, L3) daran einen ersten Abschnitt (2a) beziehungsweise einen zweiten Abschnitt (2b) umfasst, mit denen jeweils ein Wandler (3) verbunden ist, wobei der Querversatz dieser mindestens zwei axialen Bereiche (L1, L2, L3) die unabhängige Messung von Kräften ermöglicht, die jeweils bei diesen getrennten und axial versetzten Bereichen (L1, L2, L3) aufgebracht werden.

8. Gerät nach einem der Ansprüche von 1 bis 7, wobei der Wandler (3) ein kapazitives Element umfasst, das ein elektrisches Signal erzeugt, das mit dem Abstand zwischen dem ersten Abschnitt (2a) und dem zweiten Abschnitt (2b) des Bauelements korreliert ist, an dem der Wandler (3) angebracht ist.

9. Gerät nach den Ansprüchen 4 und 8, wobei die entgegensetzten und beabstandeten gegenüberstehenden Enden des offenen Rings die Platten eines Kondensators definieren, während der Zwischenraum zwischen diesen beabstandeten gegenüberstehenden Enden den Luftspalt des Kondensators bildet, wobei das vom Wandler (3) erzeugte elektrische Signal mit dem Wert dieses Luftspalts/Abstands zwischen den beabstandeten gegenüberstehenden Enden des Bauelements korreliert ist.

10. **Seilwerk,** das mindestens ein Hubseil (4) mit einem daran zum Messen der Spannung in diesem mindestens einen Seil (4) angebrachten Messgerät umfasst, **dadurch gekennzeichnet, dass** dieses Messgerät ein Gerät nach einem der Ansprüche von 1 bis 9 ist, wobei das Seil (4) mit Auflagedruckkontakt gegen einen Abschnitt des Bauelements, vorzugsweise gegen einen äußeren Abschnitt des Messgeräts, wirkt.

11. Seilwerk nach Anspruch 10, wobei:
- das Gerät in der Nähe eines gespannten Zweigs des Hubseils (4) derart integral getragen wird, dass die elastisch verformbare Struktur (2) in Kontakt mit einem ersten gespannten Axialabschnitt (4a) des Seils (4) ist und eine Querabweichung (S) dieses ersten gespannten Axialabschnitts (4a) von den Abschnitten (4b, 4c) des Seils (4) bewirkt, die sich unmittelbar vor und hinter diesem Axialabschnitt (4a) befinden, der in Querrichtung von der Achse des Seils (4) abgewichen ist, und
- ein Schiebeelement (5) in einer derartigen Position angeordnet ist, dass es auf das Seil (4) oberhalb und unterhalb des ersten Axialabschnitts (4a) entgegen der von der elastisch verformbaren Struktur (2) auf den ersten Axialabschnitt (4a) ausgeübten Wirkung einwirkt, wobei dieses Schiebeelement (5) und die elastisch verformbare Struktur (2) als Ganzes eine Zwangsbahn definieren, durch die das Seil (4) läuft, um der Querabweichung (S) unterzogen zu werden, und
- die elastisch verformbare Struktur (2) und das Schiebeelement (5) in Querrichtung und entgegengesetzt auf benachbarte Punkte oder Abschnitte des Seils (4) einwirken.

12. Seilwerk nach Anspruch 11, das Einstellmittel (6) zum Einstellen des gegenseitigen Abstands zwischen der elastisch verformbaren Struktur (2) und dem Schiebeelement (5), quer zur Achse des Seils (4) gemessen, umfasst, um den Umfang der dem Seil (4) in der Zwangsbahn aufgezwungenen Querverschiebung (S) relativ zu seiner Achse zu ändern.

13. **Verfahren zum Messen einer Kraft** unter Verwendung eines Messgeräts nach einem der Ansprüche von 1 bis 9, wobei dieses Verfahren die folgenden Schritte umfasst:
- zumindest teilweises Aufbringen dieser zu messenden Kraft auf die elastisch verformbare Struktur (2) des Bauelements, um eine elastische Verformung der elastisch verformbaren Struktur (2) zu bewirken,
- Erzeugen mit dem Wandler (3) eines ersten elektrischen Signals, das mit dem Abstand oder der Abstandsänderung zwischen dem ersten Abschnitt (2a) und dem zweiten Abschnitt (2b) der elastisch verformbaren Struktur (2) korreliert ist oder mit der Verformung der Struktur (2) korreliert ist,
- Bestimmen des Moduls der auf die elastisch verformbare Struktur (2) aufgebrachten Kraft auf Grundlage des erzeugten elektrischen Signals,
wobei:
- die elastisch verformbare Struktur (2) eine im Wesentlichen ringförmige Struktur definiert,
- die zu messende Kraft auf eine Seite der ringförmigen Struktur aufgebracht wird, um eine geometrische Verformung derselben aus einer Ausgangsform zu bewirken, und
- das vom Wandler (3) erzeugte erste Signal mit dem Abstand und/oder der Abstandsänderung zwischen zwei verschiedenen Abschnitten des Innenumfangs der ringförmigen Struktur korreliert ist.

14. Verfahren nach Anspruch 13, wobei:
- die elastisch verformbare Struktur (2) im Wesentlichen eine Struktur eines offenen Rings definiert,
- die zu messende Kraft auf eine Seite der Struktur eines offenen Rings aufgebracht wird, um eine geometrische Verformung derselben aus einer Ausgangsform zu bewirken, und
- das vom Wandler (3) erzeugte erste Signal mit dem Abstand und/oder der Abstandsänderung zwischen entgegengesetzten und beabstandeten gegenüberstehenden Enden des offenen Rings korreliert ist.

15. Verfahren nach einem der Ansprüche von 13 bis 14, wobei:
- der Wandler (3) ein kapazitives Element umfasst, und
- der Schritt des Erzeugens eines ersten elektrischen Signals durch den Wandler (3) mit Hilfe des kapazitiven Elements entsprechend dem Abstand und/oder der Abstandsänderung zwischen dem ersten Abschnitt (2a) und dem zweiten Abschnitt (2b) der elastisch verformbaren Struktur (2) des Bauelements ausgeführt wird.

## Revendications

1. **Instrument de mesure pour mesurer une force appliquée** dans un câble (4) et similaire, comprenant un élément de structure, qui est conçu pour être soumis à la force à mesurer, et un transducteur (3) associé audit élément de structure pour générer un signal électrique proportionnel à la force à mesurer, à laquelle ledit élément de structure est soumis,
**caractérisé en ce que :**
- ledit élément de structure comprend une structure déformable élastiquement (2), qui est adaptée pour être déformée élastiquement par la force à mesurer, de préférence une force de compression, appliqué audit élément de structure, de préférence appliquée à une portion extérieure dudit élément de structure,
- ladite structure déformable élastiquement (2) comporte à l'intérieur au moins une première portion (2a) et au moins une deuxième portion (2b) séparées l'une de l'autre et
- ledit transducteur (3) est associé à ladite structure déformable élastiquement (2) au niveau de ladite première portion (2a) et ladite deuxième portion (2b) pour générer un signal électrique corrélé avec la distance et/ou la variation de distance entre ladite première portion (2a) et ladite deuxième portion (2b).

2. Instrument selon la revendication 1, dans lequel ladite première portion (2a) et ladite deuxième portion (2b) de ladite structure déformable élastiquement (2) sont des portions exposées sensiblement se faisant face.

3. Instrument selon une quelconque revendication 1 à 2, dans lequel ladite structure déformable élastiquement (2) définit une structure en anneau ouvert.

4. Instrument selon la revendication 3, dans lequel :
- ladite première portion (2a) et ladite deuxième portion (2b) de ladite structure déformable élastiquement (2) définissent des extrémités se faisant face, espacées et opposées, dudit anneau ouvert et
- ledit signal électrique généré par ledit transducteur (3) est corrélé avec la distance et/ou variation de distance entre lesdites extrémités se faisant face, espacées et opposées, dudit anneau ouvert.

5. Instrument selon une quelconque revendication 1 à 2, dans lequel ladite structure déformable élastiquement (2) est définie par un élément tubulaire s'étendant dans une direction axiale dominante (X-X).

6. Instrument selon la revendication 5, dans lequel la paroi dudit élément tubulaire a une ouverture d'étendant suivant ladite direction axiale dominante (X-X).

7. Instrument selon la revendication 5 ou 6, dans lequel ledit élément tubulaire comporte au moins deux sections axiales séparées et décalées axialement (L1, L2, L3), et chacune desdites au moins deux sections axiales (L1, L2, L3) comprend respectivement une première portion (2a) et une deuxième portion (2b), avec un transducteur (3) associé respectivement à celles-ci, le décalage transversal desdites au moins deux sections axiales (L1, L2, L3) permettant une mesure indépendante de forces appliquées respectivement auxdites sections axiales séparées et décalées axialement (L1, L2, L3).

8. Instrument selon une quelconque revendication 1 à 7, dans lequel ledit transducteur (3) comprend un élément capacitif qui génère un signal électrique corrélé avec la distance entre ladite première portion (2a) et ladite deuxième portion (2b) dudit élément de structure sur lequel le transducteur (3) est monté.

9. Instrument selon les revendications 4 et 8, dans lequel lesdites extrémités se faisant face, espacées et opposées, dudit anneau ouvert définissent les plaques d'un condensateur, alors que l'espace entre lesdites extrémités espacées se faisant face forment la lame d'air dudit condensateur, le signal électrique généré par ledit transducteur (3) étant corrélé avec la valeur de ladite lame d'air/distance entre lesdites extrémités espacées se faisant face dudit élément de structure.

10. **Installation de câble** comprenant au moins un câble de levage (4) avec un instrument de mesure appliqué à celui-ci pour mesurer une tension dans ledit au moins un câble (4), **caractérisé en ce que** ledit instrument de mesure est un instrument selon une quelconque revendication 1 à 9, ledit câble (4) agissant avec un contact à pression de support contre une portion dudit élément de structure, de préférence contre une portion extérieure dudit instrument de mesure.

11. Installation de câble selon la revendication 10, dans laquelle :
- ledit instrument est supporté solidairement à proximité d'une branche tendue dudit câble de levage (4), de manière que ladite structure déformable élastiquement (2) soient en contact avec une première section axiale tendue (4a) dudit câble (4) et provoque une déviation transversale (S) de ladite première section axiale tendue (4a) par rapport aux sections (4b, 4c) dudit câble (4), situées immédiatement en amont et en aval de ladite section axiale (4a) qui a été déviée transversalement par rapport à l'axe du câble (4) et
- un élément de poussée (5) situé dans une position telle qu'il agisse sur ledit câble (4) au-dessus et au-dessous de ladite première section axiale (4a) en contraste avec l'action exercée sur ladite première section axiale (4a) par ladite structure déformable élastiquement (2), ledit élément de poussée (5) et ladite structure déformable élastiquement (2) définissant conjointement un parcours obligé à travers lequel ledit câble (4) passe pour être soumis à ladite déviation transversale (S) et
- ladite structure déformable élastiquement (2) et ledit élément de poussée (5) agissent transversalement et de manière opposée sur des sections ou points axiaux contigus dudit câble (4).

12. Installation de câble selon la revendication 11, comprenant des moyens de réglage (6) pour régler la distance mutuelle entre ladite structure déformable élastiquement (2) et l'élément de poussée (5), telle que mesurée transversalement à l'axe du câble (4), pour modifier la grandeur du déplacement transversal (S) imposé au câble (4) par rapport à son axe, dans ledit parcours obligé.

13. **Procédé de mesure d'une force** en utilisant un instrument de mesure selon une quelconque revendication 1 à 9, ledit procédé comprenant les étapes suivantes :
- l'application au moins partielle de ladite force à mesurer à la structure déformable élastiquement (2) dudit élément de structure, pour provoquer une déformation élastique de ladite structure déformable élastiquement (2),
- la génération par ledit transducteur (3) d'un premier signal électrique corrélé avec la distance ou la variation de distance entre ladite première portion (2a) et ladite deuxième portion (2b) de ladite structure déformable élastiquement (2) ou corrélé avec la déformation de la structure (2),
- la détermination du module de la force appliquée à ladite structure déformable élastiquement (2) sur la base du signal électrique généré,
dans lequel :
- ladite structure déformable élastiquement (2) définit une structure sensiblement de forme annulaire,
- ladite force à mesurer est appliquée à un côté de ladite structure de forme annulaire pour provoquer une déformation géométrique de celle-ci par rapport à une forme initiale et
- ledit premier signal généré par ledit transducteur (3) est corrélé avec la distance et/ou variation de distance entre deux portions distinctes du périmètre intérieur de ladite structure de forme annulaire.

14. Procédé selon la revendication 13, dans lequel :
- ladite structure déformable élastiquement (2) définit une structure sensiblement en anneau ouvert,
- ladite force à mesurer est appliquée à un côté de ladite structure en anneau ouvert pour provoquer une déformation géométrique de celle-ci par rapport à une forme initiale et
- ledit premier signal généré par ledit transducteur (3) est corrélé avec la distance et/ou variation de distance entre deux extrémités se faisant face, espacées et opposées, dudit anneau ouvert.

15. Procédé selon une quelconque revendication 13 à 14, dans lequel :
- ledit transducteur (3) comprend un élément capacitif et
- ladite étape de génération par ledit transducteur (3) d'un premier signal électrique est exécutée par ledit élément capacitif en fonction de la distance et/ou de la variation de distance entre ladite première portion (2a) et ladite deuxième portion (2b) de ladite structure déformable élastiquement (2) dudit élément de structure.
